# EUROPÄISCHE PATENTSCHRIFT

(11) **EP 2 524 155 B1**
(45) Veröffentlichungstag und Bekanntmachung des Hinweises auf die Patenterteilung: **25.02.2015**
(21) Anmeldenummer: 10798803.2
(22) Anmeldetag: 21.12.2010
(51) Int. Cl.: F16H 61/686, B60W 10/06, B60W 10/10, B60W 30/18, F16H 3/66

(54) **VERFAHREN ZUM BETREIBEN EINES FAHRZEUGANTRIEBSSTRANGES MIT EINER ANTRIEBSMASCHINE UND MIT EINER GETRIEBEEINRICHTUNG MIT MEHREREN SCHALTELEMENTEN**
METHOD FOR OPERATING A VEHICLE DRIVE TRAIN HAVING A DRIVING MACHINE AND HAVING A TRANSMISSION APPARATUS HAVING A PLURALITY OF SHIFT ELEMENTS
PROCÉDÉ POUR FAIRE FONCTIONNER UNE CHAÎNE CINÉMATIQUE DE VÉHICULE À MOTEUR COMPRENANT UN MOTEUR D'ENTRAÎNEMENT ET UN MÉCANISME DE TRANSMISSION COMPORTANT PLUSIEURS ÉLÉMENTS DE CHANGEMENT DE VITESSE

(30) Priorität: 13.01.2010 DE 102010000857
(43) Veröffentlichungstag der Anmeldung: 21.11.2012
(73) Patentinhaber: ZF Friedrichshafen AG, 88038 Friedrichshafen (DE)
(72) Erfinder: HERBETH, Valentine, 88045 Friedrichshafen (DE); SCHMIDT, Thilo, 88074 Meckenbeuren (DE); STEINHAUSER, Klaus, 88079 Kressbronn (DE); ARNOLD, Jörg, 88085 Langenargen (DE); MIHATSCH, Georg, 88131 Lindau (DE)
(86) Internationale Anmeldenummer: PCT/EP2010/070386
(87) Internationale Veröffentlichungsnummer: WO 2011/085926

(56) Entgegenhaltungen:
- DE-A1- 10 244 023
- DE-A1-102007 011 507
- DE-A1-102007 022 776
- DE-A1-102008 000 429
- US-A1- 2007 004 555

## Beschreibung

Die Erfindung betrifft ein Verfahren zum Betreiben eines Fahrzeugantriebsstranges mit einer Antriebsmaschine und mit einer Getriebeeinrichtung mit mehreren Schaltelementen gemäß der im Oberbegriff des Patentanspruches 1 näher definierten Art.

Ein Verfahren dieser Art ist aus Dokument DE 10 2007 011507 A1 bekannt.

Aus der Praxis bekannte Fahrzeugantriebsstränge umfassen üblicherweise als Brennkraftmaschinen ausgeführte Antriebsmaschinen, die jeweils über eine Getriebeeinrichtung mit mehreren Schaltelementen, welche zur Darstellung verschiedener Übersetzungen jeweils in einen Kraftfluss zu- oder abgeschaltet werden, mit einem Abtrieb in Wirkverbindung bringbar sind. Dabei ist der Abtrieb mit einer Getriebeausgangswelle und die Antriebsmaschine mit einer Getriebeeingangswelle der Getriebeeinrichtung gekoppelt.

Während Betriebszustandsverläufen, während welchen eine Abtriebsdrehzahl größer null ist und ein Fahrer eines Fahrzeuges den Fuß vom Gas nimmt und das Fahrzeug rollen lässt, bremst sich ein Fahrzeug bei herkömmlicher Betriebsweise des Fahrzeugantriebsstranges durch die mitlaufende Antriebsmaschine aufgrund der Motorbremse selbst ab.

Dieses Abbremsen ist jedoch oftmals von Fahrern, welche eine kraftstoffsparende Fahrweise durchführen, nicht erwünscht. Aus diesem Grund wird bei Vorliegen verschiedener Betriebszustandsparameter ein Fahrzeug während eines vorbeschriebenen Betriebszustandsverlaufes in einen so genannten Segelbetrieb überführt, während dem die Antriebsmaschine beispielsweise im Bereich der Getriebeeinrichtung durch Unterbrechen des Kraftflusses zwischen der Getriebeeingangswelle und der Getriebeausgangswelle vom Abtrieb entkoppelt und abgeschaltet wird. Dann rollt das Fahrzeug ohne Kraftstoffverbrennung und ohne antriebsmaschinenseitiges Bremsmoment ungehindert weiter, womit ein Kraftstoffverbrauch eines Fahrzeuges reduzierbar ist.

Problematisch dabei ist jedoch, dass bei Vorliegen einer Anforderung zum Ankoppeln bzw. zum Herstellen des Kraftflusses in der Getriebeeinrichtung zwischen der Getriebeeingangswelle und der Getriebeausgangswelle ein unerwünscht langer Zeitraum benötigt wird, bis der Kraftfluss im Bereich der Getriebeeinrichtung wieder hergestellt ist.

Der vorliegenden Erfindung liegt daher die Aufgabe zugrunde, ein Verfahren zum Betreiben eines Fahrzeugantriebsstranges zur Verfügung zu stellen, mittels welchem ein Kraftstoffverbrauch eines Fahrzeuges reduzierbar ist und mit dem ein Kraftfluss im Bereich einer Getriebeeinrichtung innerhalb kurzer Betriebszeiten herstellbar ist.

Erfindungsgemäß wird diese Aufgabe mit einem Verfahren mit den Merkmalen des Patentanspruches 1 gelöst.

Bei dem erfindungsgemäßen Verfahren zum Betreiben eines Fahrzeugantriebsstranges mit einer Antriebsmaschine, mit einer Getriebeeinrichtung mit mehreren Schaltelementen, welche zur Darstellung verschiedener Übersetzungen jeweils in einen Kraftfluss zu- oder abgeschaltet werden, und mit einem Abtrieb, wobei der Abtrieb mit einer Getriebeausgangswelle und die Antriebsmaschine mit einer Getriebeeingangswelle der Getriebeeinrichtung gekoppelt ist, wird bei Vorliegen einer Anforderung zum Unterbrechen des Kraftflusses in der Getriebeeinrichtung zwischen der Getriebeeingangswelle und der Getriebeausgangswelle eine maximale Anzahl der Schaltelemente in einen geschlossenen Betriebszustand und der andere Teil der Schaltelemente in einen geöffneten Betriebszustand überführt und/oder gehalten, wobei die Getriebeausgangswelle drehbar ist.

Dieser Vorgehensweise liegt die Kenntnis zugrunde, dass grundsätzlich zugeschaltete Schaltelemente innerhalb kürzerer Betriebszeiten in einen geöffneten Betriebszustand überführbar sind als geöffnete Schaltelemente in einen geschlossenen Betriebszustand. Dadurch, dass eine maximale Anzahl an Schaltelementen in einen geschlossenen Betriebszustand und der übrige Teil der Schaltelemente in einen geöffneten Betriebszustand überführt und/oder gehalten werden, wenn eine Anforderung zum Unterbrechen des Kraftflusses in der Getriebeeinrichtung zwischen der Getriebeeingangswelle und der Getriebeausgangswelle vorliegt, ist der Kraftfluss im Bereich der Getriebeeinrichtung bei einer sich daran anschließenden Anforderung zum Herstellen des Kraftflusses innerhalb kurzer Betriebszeiten herstellbar, da zur Herstellung des Kraftflusses eher Schaltelemente abzuschalten als zuzuschalten sind.

Erfindungsgemäß wird bei Vorliegen einer Anforderung zum Unterbrechen des Kraftflusses zwischen der Getriebeeingangswelle und der Getriebeausgangswelle in einem Betriebszustand der Getriebeeinrichtung, zu dem in der Getriebeeinrichtung ein formschlüssiges Schaltelement geöffnet ist, das formschlüssige Schaltelement geschlossen, wenn eine Differenzdrehzahl im Bereich des formschlüssigen Schaltelementes durch Schalten der Schaltelemente nach dem Aufheben des Kraftflusses in ein Differenzdrehzahlfenster geführt wird, innerhalb welchem das formschlüssige Schaltelement schließbar ist. Hierdurch wird der Fahrzeugantriebsstrang im Bereich der Getriebeeinrichtung bereits während der Unterbrechung des Kraftflusses für die spätere Herstellung des Kraftflusses dahingehend vorbereitet, dass ein zur Herstellung des Kraftflusses in geschlossenem Betriebszustand zu überführendes formschlüssiges Schaltelement bei unterbrochenem Kraftfluss durch definiertes Betätigen der Schaltelemente zunächst synchronisiert und in wenigstens annähernd synchronem Betriebszustand geschlossen wird.

Darüber hinaus ist ein Kraftstoffverbrauch eines erfindungsgemäß betriebenen Fahrzeugantriebsstranges bzw. ein Kraftstoffverbrauch der Antriebsmaschine auf einfache Art und Weise dadurch reduzierbar, dass die vorzugsweise als Brennkraftmaschine ausgeführte Antriebsmaschine vom Abtrieb entkoppelt und ohne Kraftstoffverbrennung ähnlich wie bei einem aus der Praxis bekannten Segelbetrieb betreibbar ist.

Bei einer vorteilhaften Variante des erfindungsgemäßen Verfahrens werden die Schaltelemente bei einer Drehzahl der Getriebeausgangswelle, die größer null ist, und bei Vorliegen einer Anforderung zur Unterbrechung des Kraftflusses zwischen der Getriebeeingangswelle und der Getriebeausgangswelle im geschlossenen oder geöffneten Betriebszustand überführt und/oder gehalten.

Wird die Getriebeeingangswelle bei unterbrochenem Kraftfluss zwischen der Getriebeeingangswelle und der Getriebeausgangswelle von den geschlossenen Schaltelementen wenigstens annähernd drehfest gehalten, wird die Getriebeeinrichtung bei unterbrochenem Kraftfluss auf einfache Art und Weise in einen definierten Betriebszustand überführt und gehalten, von dem ausgehend der Kraftfluss im Bereich der Getriebeeinrichtung auf einfache Art und Weise herstellbar ist.

Wird die Getriebeeingangswelle bei einem an einer Getriebeeingangswelle anliegenden Drehmoment der Antriebsmaschine, das wenigstens annähernd null ist, über die Schaltelemente drehfest gehalten, wird ein Abwürgen einer als Brennkraftmaschine ausgeführten Antriebsmaschine auf einfache Art und Weise vermieden.

Wird bei Vorliegen einer sich an die Anforderung zum Unterbrechen des Kraftflusses zwischen der Getriebeeingangswelle und der Getriebeausgangswelle anschließenden Anforderung zum Herstellen des Kraftflusses zwischen der Getriebeeingangswelle und der Getriebeausgangswelle die Drehzahl der Getriebeeingangswelle durch Betätigen der zur Darstellung der in der Getriebeeinrichtung einzulegenden Übersetzung in geschlossenen Betriebszustand zu führenden Schaltelemente wenigstens annähernd an die Drehzahl der Getriebeausgangswelle angepasst, liegt der Fahrzeugantriebsstrang zum Zeitpunkt, zu dem der Kraftfluss hergestellt ist, ohne weitere Maßnahmen innerhalb kurzer Betriebszeiten in synchronem Betriebszustand vor.

Bei einer weiteren vorteilhaften Variante des erfindungsgemäßen Verfahrens wird bei Vorliegen einer sich an die Anforderung zum Unterbrechen des Kraftflusses zwischen der Getriebeeingangswelle und der Getriebeausgangswelle anschließenden Anforderung zum Herstellen des Kraftflusses zwischen der Getriebeeingangswelle und der Getriebeausgangswelle in einem Betriebszustand der Getriebeeinrichtung, zu dem in der Getriebeeinrichtung ein formschlüssiges Schaltelement geöffnet ist, das bei Vorliegen der Anforderung zum Herstellen des Kraftflusses zu schließen ist, eine Differenzdrehzahl im Bereich des formschlüssigen Schaltelementes durch antriebsmaschinenseitiges Einstellen der Drehzahl der Getriebeeingangswelle in ein Differenzdrehzahlfenster geführt, innerhalb welchem das formschlüssige Schaltelement schließbar ist. Damit wird mit geringem Steuer- und Regelaufwand gewährleistet, dass ein zur Herstellung des Kraftflusses zuzuschaltendes formschlüssiges Schaltelement innerhalb vordefinierter Schaltzeiten in einen geschlossenen Betriebszustand überführbar ist und der Kraftfluss innerhalb kurzer Betriebszeiten zur Verfügung steht.

Wird die Antriebsmaschine bei unterbrochenem Kraftfluss in der Getriebeeinrichtung abgeschaltet, werden aus dem Abschaltvorgang resultierende Reaktionsmomente im Bereich des Abtriebs vermieden, welche einen Fahrkomfort unter Umständen beeinträchtigen.

Zur Darstellung eines definierten Betriebszustandes bei unterbrochenem Kraftfluss im Bereich der Getriebeeinrichtung und bei abgeschalteter Antriebsmaschine ist die Getriebeeingangswelle durch Betätigen der Schaltelemente drehfest haltbar.

Die Antriebsmaschine wird bei Vorliegen einer sich an die Anforderung zum Unterbrechen des Kraftflusses zwischen der Getriebeeingangswelle und der Getriebeausgangswelle anschließenden Anforderung zum Herstellen des Kraftflusses zwischen der Getriebeeingangswelle und der Getriebeausgangswelle bei einer weiteren vorteilhaften Variante des erfindungsgemäßen Verfahrens vor der Herstellung des Kraftflusses im Bereich der Getriebeeinrichtung zugeschaltet. Damit steht die Antriebsmaschine vorteilhafterweise zum Synchronisieren der Drehzahl der Getriebeeingangswelle und der Drehzahl der Getriebeausgangswelle zur Verfügung, um den Kraftfluss im Bereich der Getriebeeinrichtung mit möglichst geringen Belastungen im Bereich der zu betätigenden Schaltelemente herstellen zu können.

Wird die Antriebsmaschine nach der Herstellung des Kraftflusses im Bereich der Getriebeeinrichtung zugeschaltet, ist eine Kraftstoffersparnis höher als bei der letztbeschriebenen Vorgehensweise.

Weitere Vorteile und vorteilhafte Varianten des erfindungsgemäßen Verfahrens ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile die selben Bezugszeichen verwendet werden.

Sowohl die in den Unteransprüchen angegebenen Merkmale als auch die in den nachfolgenden Ausführungsbeispielen des erfindungsgemäßen Gegenstandes angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Es zeigt:
- Fig. 1: eine stark schematisierte Darstellung eines Fahrzeugantriebsstranges;
- Fig. 2: einen Radsatz einer ersten Ausführungsform einer Getriebeeinrichtung des Fahrzeugantriebsstranges gemäß Fig. 1;
- Fig. 3: ein Schaltschema der Getriebeeinrichtung gemäß Fig. 2;
- Fig. 4: einen Radsatz einer zweiten Ausführungsform einer Getriebeeinrichtung des Fahrzeugantriebsstranges gemäß Fig. 1; und
- Fig. 5: ein Schaltschema der Getriebeeinrichtung gemäß Fig. 4.

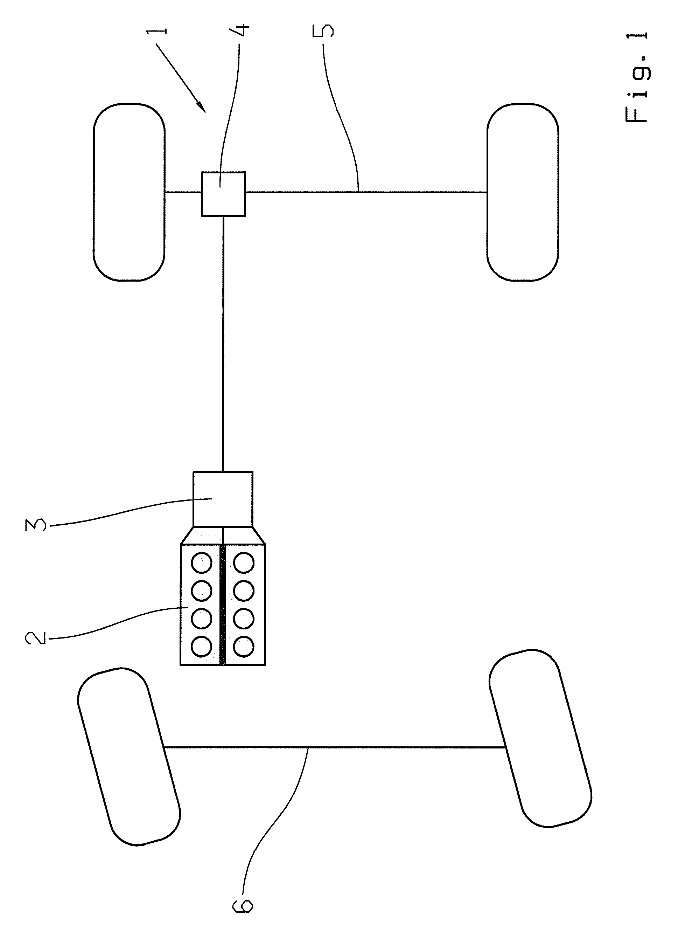

In Fig. 1 ist ein Fahrzeugantriebsstrang 1 mit einer vorliegend als Brennkraftmaschine ausgeführten Antriebsmaschine 2, mit einer Getriebeeinrichtung 3, mittels welcher verschiedene Übersetzungen für Vorwärts- und Rückwärtsfahrt darstellbar sind, mit einer Differentialgetriebeeinheit 4 und mit zwei Fahrzeugachsen 5, 6 dargestellt, wobei die Fahrzeugachse 5 vorliegend die Fahrzeughinterachse und die Fahrzeugachse 6 die Fahrzeugvorderachse ist.

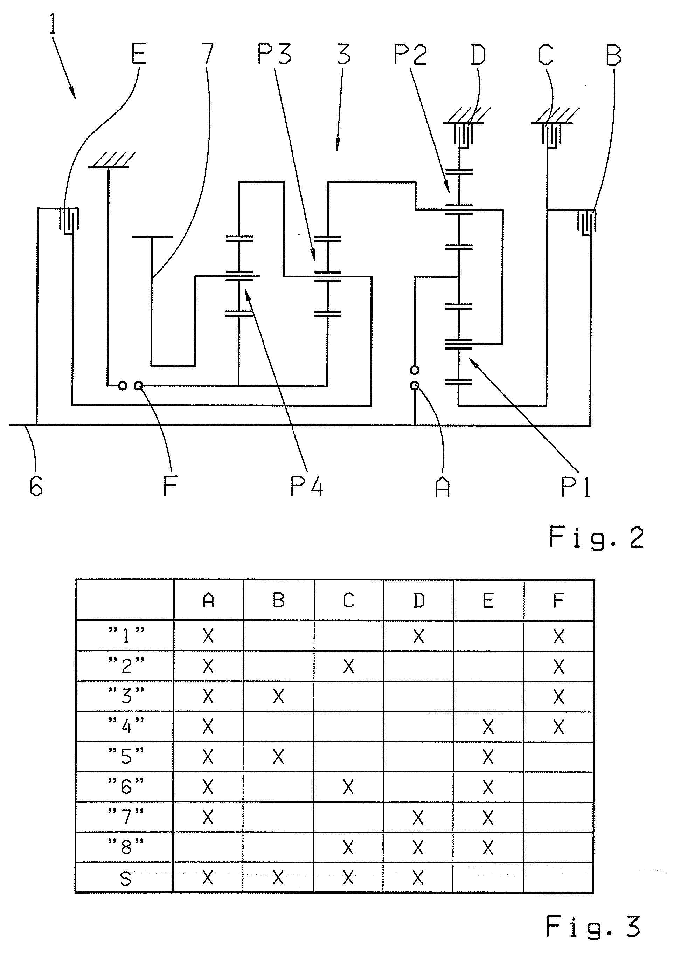

Ein Räderschema einer ersten Ausführungsform der Getriebeeinrichtung 3 bzw. eines Mehrstufengetriebes, welches grundsätzlich aus der DE 10 2008 000 429 A1 bekannt ist, ist in Fig. 2 dargestellt. Die Getriebeeinrichtung 3 umfasst eine Getriebeeingangswelle 6 und eine Getriebeausgangswelle 7, die in in einem Fahrzeug montierten Zustand mit der Differentialgetriebeeinheit 4 verbunden ist, während die Getriebeeingangswelle 6 mit der Antriebsmaschine 2 wirkverbunden ist.

Darüber hinaus umfasst die Getriebeeinrichtung 3 vier Planetenradsätze P1 bis P4, wobei der erste und der zweite Planetenradsatz P1, P2, die vorzugsweise als Minus-Planetensätze ausgebildet sind, einen schaltbaren Vorschaltradsatz bilden, während der dritte und der vierte Planetenradsatz P3, P4 den Hauptradsatz darstellen. Zusätzlich umfasst die Getriebeeinrichtung 3 sechs Schaltelemente A bis F wovon die Schaltelemente C, D und F als Bremsen und die Schaltelemente A, B und E als Schaltkupplungen ausgeführt sind.

Mit den Schaltelementen A bis F ist ein selektives Schalten von wenigstens acht Vorwärtsgängen "1" bis "8" und einem Rückwärtsgang realisierbar, wobei zur Darstellung einer Übersetzung in der Getriebeeinrichtung 3 bzw. zum Herstellen eines Kraftflusses in der Getriebeeinrichtung 3 zwischen der Getriebeeingangswelle 6 und der Getriebeausgangswelle 7 jeweils gleichzeitig drei Schaltelemente in einen geschlossenen Betriebszustand zu führen bzw. zu halten sind.

Die Schaltelemente A und F sind vorliegend als formschlüssige Schaltelemente ausgebildet, um im Betrieb der Getriebeeinrichtung 3 im Vergleich zu Getriebeeinrichtungen, die nur mit reibschlüssigen Schaltelementen ausgebildet sind, durch geöffnete reibschlüssige Schaltelemente verursachte Schleppmomente zu reduzieren. Da formschlüssige Schaltelemente im Allgemeinen nur innerhalb eines sehr schmalen Differenzdrehzahlbandes um die Synchrondrehzahl herum aus einem geöffneten Betriebszustand in einen geschlossenen Betriebszustand überführbar sind, wird die Synchronisierung eines zuzuschaltenden formschlüssigen Schaltelementes ohne zusätzliche konstruktive Ausführungen durch entsprechende Betätigung der reibschlüssigen Schaltelemente oder über einen Motoreingriff unterstützt bzw. vollständig realisiert.

Ist in der Getriebeeinrichtung 3 die achte Übersetzung "8" für Vorwärtsfahrt eingelegt, sind die Schaltelemente C, D und E in geschlossenem Zustand gehalten. Bei Vorliegen einer Anforderung für einen Übergang in einen Segelbetrieb des Fahrzeugantriebsstranges 1 wird gleichzeitig auch eine Unterbrechung des Kraftflusses im Bereich der Getriebeeinrichtung 3 zwischen der Getriebeeingangswelle 6 und der Getriebeausgangswelle 7 angefordert. Zusätzlich ist zur Darstellung des Segelbetriebes auch die Antriebsmaschine 2 abzuschalten.

Dabei wird zunächst das reibschlüssige Schaltelement E geöffnet und anschließend die Antriebsmaschine 2 abgeschaltet. Ein Betätigungsdruck des Schaltelementes B wird rampenförmig erhöht, bis eine Differenzdrehzahl im Bereich des nach wie vor in geöffnetem Betriebszustand vorliegenden formschlüssigen Schaltelementes A innerhalb eines Drehzahlfensters geführt ist, innerhalb welchem das formschlüssige Schaltelement A in einem wenigstens annähernd synchronen Betriebszustand vorliegt, in dem das formschlüssige Schaltelement A auf einfache Art und Weise in einen geschlossenen Betriebszustand überführbar ist.

Da die Antriebsmaschine 2 abgeschaltet ist, stellt diese für eine primäre Ölversorgung, die vorliegend eine mit der Getriebeeingangswelle 6 wirkverbundene Getriebeölpumpe umfasst, nicht das für die Ölversorgung der Schaltelemente erforderliche Antriebsmoment zur Verfügung. Aus diesem Grund weist die Getriebeeinrichtung 3 in nicht näher dargestellter Art und Weise eine sekundäre Ölversorgung auf. Diese kann beispielsweise so ausgebildet sein, dass die hydraulische Versorgung bei abgeschalteter Antriebsmaschine 2 mittels einer elektrisch angetriebenen Pumpe erfolgt.

Neben dem formschlüssigen Schaltelement A werden die Schaltelemente C und D weiterhin in geschlossenem Betriebszustand gehalten, womit im Segelbetrieb S des Fahrzeugantriebsstranges 1 bzw. der Getriebeeinrichtung 3 die Schaltelemente A, B, C und D in geschlossenem Betriebszustand vorliegen. Der Kraftfluss ist zwischen der Getriebeeingangswelle 6 und der Getriebeausgangswelle 7 unterbrochen und die Getriebeausgangswelle 7 ist frei drehbar, während die Getriebeeingangswelle 6 von den geschlossenen Schaltelementen A bis D drehfest gehalten ist.

Folgt auf die Anforderung zum Unterbrechen des Kraftflusses im Bereich der Getriebeeinrichtung 3 eine Anforderung zum Herstellen des Kraftflusses zwischen der Getriebeeingangswelle 6 und der Getriebeausgangswelle 7 wird zunächst der aktuelle Betriebszustand des Fahrzeugantriebsstranges 1 bzw. eine Drehzahl des Abtriebs des Fahrzeugantriebsstranges 1 ermittelt. Ist aufgrund des aktuell ermittelten Betriebszustandes des Fahrzeugantriebsstranges 1 ausgehend vom Segelbetrieb S die siebte Übersetzungsstufe "7" in der Getriebeeinrichtung 3 einzulegen, werden die Schaltelemente B und C in ihren geöffneten Betriebszustand überführt, während das Schaltelement E geschlossen wird.

Ist aufgrund des aktuellen Betriebszustandes des Fahrzeugantriebsstranges 1 in der Getriebeeinrichtung 3 die sechste Übersetzungsstufe "6" in die Getriebeeinrichtung einzulegen, werden die Schaltelemente B und D geöffnet, während das Schaltelement E geschlossen wird. Bei einzulegender fünfter Übersetzungsstufe "5" sind die Schaltelemente C und D zu öffnen, während das Schaltelement E zu schließen ist.

Da eine die Planetenradsätze P1 und P2 umfassende Radsatzgruppe während des Segelbetriebes S blockiert ist, ist die Herstellung des Kraftflusses über einen Einstieg in die höheren Gangstufen bei gleichzeitiger Unterbrechung des Segelbetriebes sehr schnell realisierbar.

Die Drehzahl der Getriebeeingangswelle 6 ist in Abhängigkeit des jeweils vorliegenden Anwendungsfalles entweder über die Zuschaltung des reibschlüssigen Schaltelementes E oder die zugeschaltete Antriebsmaschine 2 auf ein zu dem Drehzahlniveau der Getriebeausgangswelle 7 äquivalentes Drehzahlniveau anhebbar.

Grundsätzlich wird beim Übergang in den Segelbetrieb S zunächst der Kraftfluss durch Öffnen eines oder mehrerer Schaltelemente A bis F unterbrochen und anschließend die Antriebsmaschine 2 abgeschaltet. Nach Abschalten der Antriebsmaschine 2 werden die Planetenradsätze P1 und P2 durch Zuschalten und/oder Halten der Schaltelemente A bis D in geschlossenem Betriebszustand blockiert, wobei während dieser Vorgehensweise die mit der Getriebeeingangswelle 6 gekoppelten Getriebeelemente der Getriebeeinrichtung 3 bzw. deren Drehzahlen auf null heruntergezogen werden.

Das formschlüssige Schaltelement A wird bei einem Übergang in den Segelbetrieb S ausgehend von der achten Übersetzungsstufe "8" erst dann geschlossen, wenn sich die Differenzdrehzahl im Bereich des formschlüssigen Schaltelementes A dem Wert null annähert. Die die Planetenradsätze P1 und P2 umfassende Radsatzgruppe der Getriebeeinrichtung 3 bleibt während des Segelbetriebes S die ganze Zeit blockiert.

Bei einem Ausstieg aus dem Segelbetrieb S wird der Kraftfluss in der Getriebeeinrichtung 3 dadurch hergestellt, dass die zur Darstellung der angeforderten Übersetzung in der Getriebeeinrichtung 3 zu schließenden Schaltelemente geschlossen werden oder in geschlossenem Betriebszustand gehalten werden und anschließend ein noch geöffnetes Schaltelement des einzulegenden Ganges bzw. des Zielganges geschlossen bzw. synchronisiert wird. Generell ermöglicht diese Vorgehensweise den Kraftfluss im Bereich der Getriebeeinrichtung 3 mit minimalem ölpumpenseitigen Volumenbedarf schnellstmöglich herzustellen.

Ist aufgrund des aktuellen Betriebszustandes des Fahrzeugantriebsstranges 1 ausgehend vom Segelbetrieb S in der Getriebeeinrichtung 3 die erste Übersetzungsstufe "1", die zweite Übersetzungsstufe "2", die dritte Übersetzungsstufe "3" oder die vierte Übersetzungsstufe "4" einzulegen, ist jeweils das weitere formschlüssige Schaltelement F zu zwei weiteren Schaltelementen A und D, A und C, A und B oder A und E in einen geschlossenen Betriebszustand zu überführen.

Da das formschlüssige Schaltelement A bereits beim Übergang in den Segelbetrieb S in seinen geschlossenen Betriebszustand überführt wird, sind jeweils die Schaltelemente B und C, B und D, C und D oder B bis D zu öffnen, während eines der reibschlüssigen Schaltelemente D, C oder B in geschlossenem Betriebszustand zu halten ist oder das reibschlüssige Schaltelement E in seinen geschlossenen Betriebszustand zu überführen ist. Anschließend wird das formschlüssige Schaltelement F in den Kraftfluss zugeschaltet, wobei eine Synchronisierung des formschlüssigen Schaltelementes F während des Motorhochlaufs der Antriebsmaschine 2 oder nach Beendigung des Motorhochlaufs über einen definierten Motoreingriff im Bereich der Antriebsmaschine 2 synchronisiert und anschließend geschlossen wird.

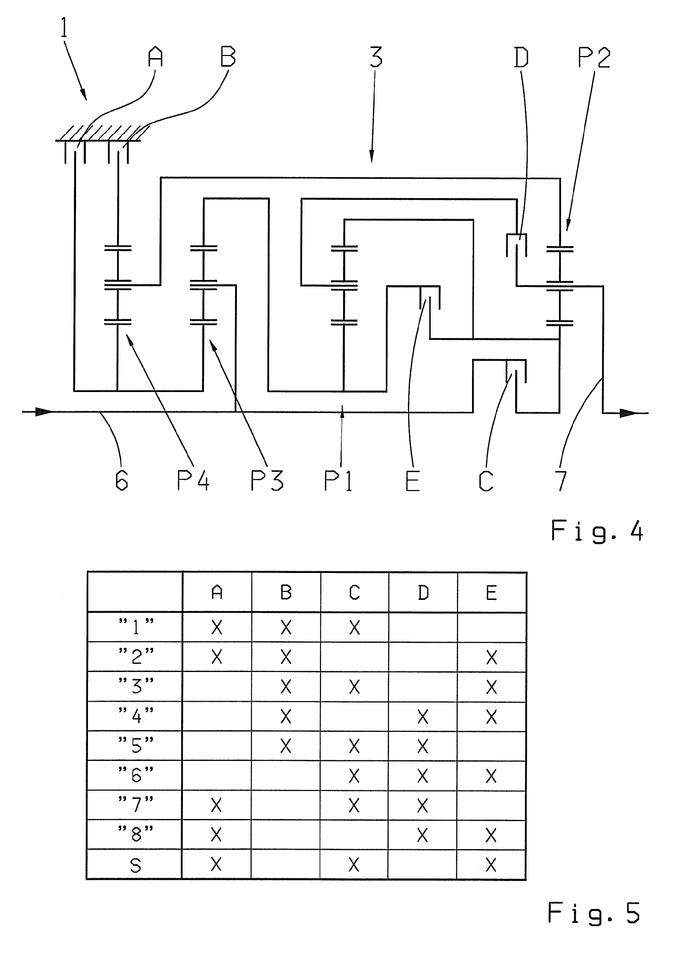

Fig. 4 zeigt ein Räderschema einer zweiten Ausführungsform der Getriebeeinrichtung 3, die mit fünf reibschlüssigen Schaltelementen A bis E und vier Planetenradsätzen P1 bis P4 ausgeführt ist. Gemäß dem in Fig. 5 dargestellten Schaltschema sind über die Getriebeeinrichtung 3 gemäß Fig. 4 ebenfalls wenigstens acht Übersetzungen "1" bis "8" für Vorwärtsfahrt und ein Rückwärtsgang darstellbar, wobei hierfür jeweils drei der Schaltelemente A bis E in geschlossenem Betriebszustand zu halten sind, während die übrigen Schaltelemente geöffnet sind.

Zur Darstellung des Segelbetriebes S sind die Schaltelemente A, C und E in geschlossenem Betriebszustand zu halten, während die Schaltelemente B und D geöffnet sind. Damit wird auf einfache Art und Weise erreicht, dass eine maximale Anzahl der Schaltelemente A bis E während des Segelbetriebes geschlossen ist, die Getriebeausgangswelle 7 frei drehbar ist und gleichzeitig die Getriebeeingangswelle 6 drehfest gehalten ist.

Zum Verlassen des Segelbetriebes S ist jeweils die für den aktuell ermittelten Betriebszustand des Fahrzeugantriebsstranges 1 geeignete Übersetzung in der Getriebeeinrichtung 3 einzulegen, wofür die jeweils damit korrespondierenden Schaltelemente in einen geschlossenen Betriebszustand zu führen und/oder zu halten sind, während die weiteren Schaltelemente zu öffnen und/oder in geöffneten Betriebszustand zu halten sind.

### Bezugszeichen

- 1: Fahrzeugantriebsstrang
- 2: Antriebsmaschine
- 3: Getriebeeinrichtung
- 4: Differentialgetriebeeinheit
- 5: Fahrzeugachse
- 6: Getriebeeingangswelle
- 7: Getriebeausgangswelle
- "1" bis "8": Übersetzung für Vorwärtsfahrt
- A bis F: Schaltelement
- P1 bis P4: Planetenradsatz
- S: Segelbetrieb

## Patentansprüche

1. Verfahren zum Betreiben eines Fahrzeugantriebsstranges (1) mit einer Antriebsmaschine (2), mit einer Getriebeeinrichtung (3) mit mehreren Schaltelementen (A bis F), welche zur Darstellung verschiedener Übersetzungen ("1" bis "8") jeweils in einen Kraftfluss zu- oder abgeschaltet werden und mit einem Abtrieb, wobei der Abtrieb mit einer Getriebeausgangswelle (7) und die Antriebsmaschine (2) mit einer Getriebeeingangswelle (6) der Getriebeeinrichtung (3) gekoppelt sind, wobei bei Vorliegen einer Anforderung zum Unterbrechen des Kraftflusses in der Getriebeeinrichtung (3) zwischen der Getriebeeingangswelle (6) und der Getriebeausgangswelle (7) eine maximale Anzahl der Schaltelemente (A bis F) in einen geschlossenen Betriebszustand und der andere Teil der Schaltelemente (A bis F) in einen geöffneten Betriebszustand überführt und/oder gehalten wird, wobei die Getriebeausgangswelle (7) drehbar ist, **dadurch gekennzeichnet, dass** bei Vorliegen einer Anforderung zum Unterbrechen des Kraftflusses zwischen der Getriebeeingangswelle (6) und der Getriebeausgangswelle (7) in einem Betriebszustand der Getriebeeinrichtung (3), zu dem in der Getriebeeinrichtung (3) ein formschlüssiges Schaltelement (A) geöffnet ist, das formschlüssige Schaltelement (A) geschlossen wird, wenn eine Differenzdrehzahl im Bereich des formschlüssigen Schaltelementes (A) durch Schalten der Schaltelemente (B bis E) nach dem Aufheben des Kraftflusses in ein Differenzdrehzahlfenster geführt wird, innerhalb welchem das formschlüssige Schaltelement (A) schließbar ist.

2. Verfahren nach Anspruch 1, **dadurch gekennzeichnet, dass** die Drehzahl der Getriebeausgangswelle (7) größer null ist.

3. Verfahren nach Anspruch 1 oder 2, **dadurch gekennzeichnet, dass** die Getriebeeingangswelle (6) bei unterbrochenem Kraftfluss zwischen der Getriebeeingangswelle (6) und der Getriebeausgangswelle (7) von den geschlossenen Schaltelementen (A bis D; A, D, E) wenigstens annähernd drehfest gehalten ist.

4. Verfahren nach Anspruch 3, **dadurch gekennzeichnet, dass** die Getriebeeinqanqswelle (6), bei einem an der Getriebeeingangswelle (6) anliegender Drehmoment der Antriebsmaschine (2), das wenigstens annähernd null ist, über die Schaltelemente (A bis D; A, D, E) drehfest gehalten wird.

5. Verfahren nach einem der Ansprüche 1 bis 4, **dadurch gekennzeichnet, dass** bei Vorliegen einer sich an die Anforderung zum Unterbrechen des Kraftflusses zwischen der Getriebeeingangswelle (6) und der Getriebeausgangswelle (7) anschließenden Anforderung zum Herstellen des Kraftflusses zwischen der Getriebeeingangswelle (6) und der Getriebeausgangswelle (7) die zur Darstellung der betriebszustandsabhängig in der Getriebeeinrichtung einzulegenden Übersetzung ("1" bis "7") zuzuschaltenden Schaltelemente (A bis F) in den geschlossenen Betriebszustand überführt und/oder gehalten werden, während die weiteren Schaltelemente (A bis F) in den geöffneten Betriebszustand überführt und/oder gehalten werden.

6. Verfahren nach Anspruch 5, **dadurch gekennzeichnet, dass** bei Vorliegen der sich an die Anforderung zum Unterbrechen des Kraftflusses zwischen der Getriebeeingangswelle (6) und der Getriebeausgangswelle (7) anschließenden Anforderung zum Herstellen des Kraftflusses zwischen der Getriebeeingangswelle (6) und der Getriebeausgangswelle (7) die Drehzahl der Getriebeeingangswelle (6) durch Betätigen der zur Darstellung der in der Getriebeeinrichtung (3) einzulegenden Übersetzung ("1" bis "7") in geschlossenen Betriebszustand zu führenden Schaltelemente (A bis F) wenigstens annähernd an die Drehzahl der Getriebeausgangswelle (7) angepasst wird.

7. Verfahren nach einem der Ansprüche 5 oder 6, **dadurch gekennzeichnet, dass** bei Vorliegen der sich an die Anforderung zum Unterbrechen des Kraftflusses zwischen der Getriebeeingangswelle (6) und der Getriebeausgangswelle (7) anschließenden Anforderung zum Herstellen des Kraftflusses zwischen der Getriebeeingangswelle (6) und der Getriebeausgangswelle (7) in einem Betriebszustand der Getriebeeinrichtung, zu dem in der Getriebeeinrichtung ein formschlüssiges Schaltelement (F) geöffnet ist, das bei Vorliegen der Anforderung zum Herstellen des Kraftflusses zu schließen ist, eine Differenzdrehzahl im Bereich des formschlüssigen Schaltelementes (F) durch antriebsmaschinenseitiges Einstellen der Drehzahl der Getriebeeingangswelle (6) in ein Differenzdrehzahlfenster geführt wird, innerhalb welchem das formschlüssige Schaltelement (F) schließbar ist.

8. Verfahren nach einem der Ansprüche 5 bis 7, **dadurch gekennzeichnet, dass** die Antriebsmaschine (2) bei unterbrochenem Kraftfluss in der Getriebeeinrichtung (3) abgeschaltet wird.

9. Verfahren nach Anspruch 8, **dadurch gekennzeichnet, dass** die Getriebeeingangswelle (6) bei abgeschalteter Antriebsmaschine (2) durch Betätigen der Schaltelemente (A bis D; A, C, E) drehfest gehalten wird.

10. Verfahren nach einem der Ansprüche 5 bis 9, **dadurch gekennzeichnet, dass** die Antriebsmaschine (2) bei Vorliegen der sich an die Anforderung zum Unterbrechen des Kraftflusses zwischen der Getriebeeingangswelle (6) und der Getriebeausgangswelle (7) anschließenden Anforderung zum Herstellen des Kraftflusses zwischen der Getriebeeingangswelle (6) und der Getriebeausgangswelle (7) vor der Herstellung des Kraftflusses im Bereich der Getriebeeinrichtung (3) zugeschaltet wird.

11. Verfahren nach einem der Ansprüche 5 bis 9, **dadurch gekennzeichnet, dass** die Antriebsmaschine (2) bei Vorliegen der sich an die Anforderung zum Unterbrechen des Kraftflusses zwischen der Getriebeeingangswelle (6) und der Getriebeausgangswelle (7) anschließenden Anforderung zum Herstellen des Kraftflusses zwischen der Getriebeeingangswelle (6) und der Getriebeausgangswelle (7) nach der Herstellung des Kraftflusses im Bereich der Getriebeeinrichtung (3) zugeschaltet wird.

## Claims

1. Method for operating a vehicle drive train (1) with an engine (2), with a transmission apparatus (3) having a plurality of shift elements (A to F), which are in each case connected into or disconnected from a force flux in order to provide various step-up ratios ("1" to "8"), and with a power take-off, the power take-off being coupled to a transmission output shaft (7) and the engine (2) being coupled to a transmission input shaft (6) of the transmission apparatus (3), wherein, in the presence of a requirement for interrupting the force flux in the transmission apparatus (3) between the transmission input shaft (6) and the transmission output shaft (7) a maximum number of the shift elements (A to F) are transferred into and/or held in a closed operating state and the other shift elements (A to F) are transferred into and/or held in an open operating state, the transmission output shaft (7) being rotatable, **characterized in that**, in the presence of a requirement for interrupting the force flux between the transmission input shaft (6) and the transmission output shaft (7) in an operating state of the transmission apparatus (3) for which a positive shift element (A) is opened in the transmission apparatus (3), the positive shift element (A) is closed when a differential rotational speed in the region of the positive shift element (A) is guided by the shift of the shift elements (B to E), after the cancellation of the force flux, into a differential rotational-speed window within which the positive shift element (A) can be closed.

2. Method according to Claim 1, **characterized in that** the rotational speed of the transmission output shaft (7) is higher than zero.

3. Method according to Claim 1 or 2, **characterized in that** the transmission input shaft (6) is held at least approximately fixedly in terms of rotation by the closed shift elements (A to D, A, D, E) when the force flux between the transmission input shaft (6) and the transmission output shaft (7) is interrupted.

4. Method according to Claim 3, **characterized in that** the transmission input shaft (6) is held fixedly in terms of rotation by the shift elements (A to D; A, D, E) when a torque of the engine (2) which is at least approximately zero prevails at the transmission input shaft (6).

5. Method according to one of Claims 1 to 4, **characterized in that**, in the presence of a requirement, subsequent to the requirement for interrupting the force flux between the transmission input shaft (6) and the transmission output shaft (7), for producing the force flux between the transmission input shaft (6) and the transmission output shaft (7), the shift elements (A to F) to be connected in order to provide the step-up ratio ("1" to "7") to be selected in the transmission apparatus as a function of the operating state are transferred into and/or held in the closed operating state, while the further shift elements (A to F) are transferred into and/or held in the open operating state.

6. Method according to Claim 5, **characterized in that**, in the presence of the requirement, subsequent to the requirement for interrupting the force flux between the transmission input shaft (6) and the transmission output shaft (7), for producing the force flux between the transmission input shaft (6) and the transmission output shaft (7), the rotational speed of the transmission input shaft (6) is adapted at least approximately to the rotational speed of the transmission output shaft (7) as a result of the actuation of the shift elements (A to F) to be guided into the closed operating state in order to provide the step-up ratio ("1" to "7") to be selected in the transmission apparatus (3).

7. Method according to either one of Claims 5 and 6, **characterized in that**, in the presence of the requirement, subsequent to the requirement for interrupting the force flux between the transmission input shaft (6) and the transmission output shaft (7), for producing the force flux between the transmission input shaft (6) and the transmission output shaft (7) in an operating state of the transmission apparatus for which, in the transmission apparatus, a positive shift element (F) is opened, which is to be closed in the presence of the requirement for producing force flux, a differential rotational speed in the region of the positive shift element (F) is guided as a result of the engine-side setting of the rotational speed of the transmission input shaft (6) into a differential rotational-speed window within which the positive shift element (F) can be closed.

8. Method according to one of Claims 5 to 7, **characterized in that** the engine (2) is switched off when the force flux in the transmission apparatus (3) is interrupted.

9. Method according to Claim 8, **characterized in that**, with the engine (2) switched off, the transmission input shaft (6) is held fixedly in terms of rotation as a result of the actuation of the shift elements (A to D; A, C, E).

10. Method according to one of Claims 5 to 9, **characterized in that**, in the presence of the requirement, subsequent to the requirement for interrupting the force flux between the transmission input shaft (6) and the transmission output shaft (7), for producing the force flux between the transmission input shaft (6) and the transmission output shaft (7), the engine (2) is switched on before the force flux is produced in the region of the transmission apparatus (3).

11. Method according to one of Claims 5 to 9, **characterized in that**, in the presence of the requirement, subsequent to the requirement for interrupting the force flux between the transmission input shaft (6) and the transmission output shaft (7), for producing the force flux between the transmission input shaft (6) and the transmission output shaft (7), the engine (2) is switched on after the force flux is produced in the region of the transmission apparatus (3).

## Revendications

1. Procédé pour faire fonctionner une chaîne cinématique de véhicule (1), comprenant une machine motrice (2), un dispositif de transmission (3) avec plusieurs éléments de changement de vitesse (A à F), qui sont être chacun enclenchés ou désenclenchés dans un flux de force pour réaliser différentes démultiplications ("1" à "8"), et une prise de force, la prise de force étant accouplée à un arbre de sortie de transmission (7) et la machine motrice (2) étant accouplée à un arbre d'entrée de transmission (6) du dispositif de transmission (3), et, en présence d'un ordre d'interruption du flux de force dans le dispositif de transmission (3) entre l'arbre d'entrée de transmission (6) et l'arbre de sortie de transmission (7), un nombre maximum des éléments de changement de vitesse (A à F) étant transféré et/ou maintenu dans un état de fonctionnement fermé et l'autre partie des éléments de changement de vitesse (A à F) étant transférée et/ou maintenue dans un état de fonctionnement ouvert, l'arbre de sortie de transmission (7) pouvant tourner, **caractérisé en ce qu'**en présence d'un ordre d'interruption du flux de force entre l'arbre d'entrée de transmission (6) et l'arbre de sortie de transmission (7) dans un état de fonctionnement du dispositif de transmission (3) auquel un élément de changement de vitesse à engagement positif (A) est ouvert dans le dispositif de transmission (3), l'élément de changement de vitesse à engagement positif (A) est fermé si une différence de vitesse de rotation au niveau de l'élément de changement de vitesse à engagement positif (A) est amenée dans une fenêtre de différence de vitesse de rotation à l'intérieur de laquelle l'élément de changement de vitesse à engagement positif (A) peut être fermé, par commutation des éléments de changement de vitesse (B à E) après la suppression du flux de force.

2. Procédé selon la revendication 1, **caractérisé en ce que** la vitesse de rotation de l'arbre de sortie de transmission (7) est supérieure à zéro.

3. Procédé selon la revendication 1 ou 2, **caractérisé en ce que** l'arbre d'entrée de transmission (6), lorsque le flux de force entre l'arbre d'entrée de transmission (6) et l'arbre de sortie de transmission (7) est interrompu, est maintenu au moins approximativement solidaire en rotation par les éléments de changement de vitesse fermés (A à D ; A, D, E).

4. Procédé selon la revendication 3, **caractérisé en ce que** l'arbre d'entrée de transmission (6), lorsqu'un couple de la machine motrice (2), qui est au moins approximativement nul, s'applique à l'arbre d'entrée de transmission (6), est maintenu solidaire en rotation par le biais des éléments de changement de vitesse (A à D ; A, D, E).

5. Procédé selon l'une quelconque des revendications 1 à 4, **caractérisé en ce qu'**en présence d'un ordre d'établissement du flux de force entre l'arbre d'entrée de transmission (6) et l'arbre de sortie de transmission (7), suivant l'ordre d'interruption du flux de force entre l'arbre d'entrée de transmission (6) et l'arbre de sortie de transmission (7), les éléments de changement de vitesse (A à F) devant être enclenchés pour réaliser la démultiplication ("1" à "7") à appliquer en fonction de l'état de fonctionnement dans le dispositif de transmission sont transférés et/ou maintenus dans l'état de fonctionnement fermé, tandis que les autres éléments de changement de vitesse (A à F) sont transférés et/ou maintenus dans l'état de fonctionnement ouvert.

6. Procédé selon la revendication 5, **caractérisé en ce qu'**en présence de l'ordre d'établissement du flux de force entre l'arbre d'entrée de transmission (6) et l'arbre de sortie de transmission (7), suivant l'ordre d'interruption du flux de force entre l'arbre d'entrée de transmission (6) et l'arbre de sortie de transmission (7), la vitesse de rotation de l'arbre d'entrée de transmission (6) est adaptée au moins approximativement à la vitesse de rotation de l'arbre de sortie de transmission (7) par actionnement des éléments de changement de vitesse (A à F) devant être amenés dans l'état de fonctionnement fermé pour réaliser la démultiplication ("1" à "7") à appliquer dans le dispositif de transmission (3).

7. Procédé selon l'une quelconque des revendications 5 ou 6, **caractérisé en ce qu'**en présence de l'ordre d'établissement du flux de force entre l'arbre d'entrée de transmission (6) et l'arbre de sortie de transmission (7), suivant l'ordre d'interruption du flux de force entre l'arbre d'entrée de transmission (6) et l'arbre de sortie de transmission (7), dans un état de fonctionnement du dispositif de transmission auquel un élément de changement de vitesse à engagement positif (F) est ouvert dans le dispositif de transmission, lequel doit être fermé en présence de l'ordre d'établissement du flux de force, une différence de vitesse de rotation au niveau de l'élément de changement de vitesse à engagement positif (F) est amenée dans une fenêtre de différence de vitesse de rotation à l'intérieur de laquelle l'élément de changement de vitesse à engagement positif (F) peut être fermé par ajustement de la vitesse de rotation de l'arbre d'entrée de transmission (6) du côté de la machine motrice.

8. Procédé selon l'une quelconque des revendications 5 à 7, **caractérisé en ce que** la machine motrice (2) est arrêtée lorsque le flux de force est interrompu dans le dispositif de transmission (3).

9. Procédé selon la revendication 8, **caractérisé en ce que** l'arbre d'entrée de transmission (6), lorsque la machine motrice (2) est arrêtée, est maintenu solidaire en rotation par actionnement des éléments de changement de vitesse (A à D ; A, C, E).

10. Procédé selon l'une quelconque des revendications 5 à 9, **caractérisé en ce que** la machine motrice (2), en présence de l'ordre d'établissement du flux de force entre l'arbre d'entrée de transmission (6) et l'arbre de sortie de transmission (7), suivant l'ordre d'interruption du flux de force entre l'arbre d'entrée de transmission (6) et l'arbre de sortie de transmission (7), est enclenchée avant l'établissement du flux de force au niveau du dispositif de transmission (3).

11. Procédé selon l'une quelconque des revendications 5 à 9, **caractérisé en ce que** la machine motrice (2), en présence de l'ordre d'établissement du flux de force entre l'arbre d'entrée de transmission (6) et l'arbre de sortie de transmission (7), suivant l'ordre d'interruption du flux de force entre l'arbre d'entrée de transmission (6) et l'arbre de sortie de transmission (7), est enclenchée après l'établissement du flux de force au niveau du dispositif de transmission (3).
